# EUROPEAN PATENT APPLICATION

(11) **EP 4 585 326 A1**
(43) Date of publication of application: **16.07.2025**
(21) Application number: 23879476.2
(22) Date of filing: 29.08.2023
(51) Int. Cl.: B22D 11/16, B22D 46/00

(54) **DEFECT OCCURRENCE FACTOR ESTIMATION DEVICE, DEFECT OCCURRENCE FACTOR ESTIMATION METHOD, LEARNING METHOD FOR DEFECT OCCURRENCE FACTOR ESTIMATION MODEL, OPERATION CONDITION DETERMINATION METHOD, AND STEEL PRODUCT PRODUCTION METHOD**

(30) Priority: 17.10.2022 JP 2022166047
(71) Applicant: JFE Steel Corporation, Tokyo 100-0011 (JP)
(72) Inventor: KUYAMA, Shuji, Tokyo 100-0011 (JP); YAMAGUCHI, Hiroshi, Tokyo 100-0011 (JP); NISHIDA, Shuji, Tokyo 100-0011 (JP); TANAKA, Hirokazu, Tokyo 100-0011 (JP); MIKI, Yuji, Tokyo 100-0011 (JP)
(74) Representative: Hoffmann Eitle
(86) International application number: PCT/JP2023/031237
(87) International publication number: WO 2024/084824

(57) **Abstract**

A defect cause estimation device includes a defect occurrence depth calculation unit configured to calculate a depth position at a slab stage of a surface defect in a product, a defect occurrence rate calculation unit configured to calculate a defect occurrence rate for each slab depth, an inclusion adhesion ratio calculation unit configured to calculate an inclusion adhesion ratio for each distance from a solidification start position at the time of slab casting based on the defect occurrence rate for each slab depth, and a defect cause estimation unit configured to estimate a defect cause by selecting a part of manufacturing conditions using an estimation model learned in advance with manufacturing conditions for the product set as input data and with the inclusion adhesion ratio set as output data and by estimating an inclusion adhesion ratio in the case in which the selected manufacturing conditions are changed stepwise.

## Description

### Field

The present invention relates to a defect cause estimation device, a defect cause estimation method, a learning method for a defect cause estimation model, an operation condition determination method, and a method of manufacturing a steel product.

### Background

Patent Literature 1 discloses a support system that supports cause estimation work when an operator performs work for estimating a cause of a quality abnormality. In the method proposed in Patent Literature 1, a correlation between operational variables and quality in past actual operational data is focused on, operational variables having a strong correlation with quality are extracted, and a time-series chart of the operational variables is displayed to an operator.

### Citation List

### Patent Literature

Patent Literature 1: Japanese Patent No. 6116445 Summary

### Technical Problem

In the method proposed in Patent Literature 1, in order to specify a cause of a quality abnormality, cause estimation is performed by focusing on a relationship based on a correlation between quality and manufacturing conditions from product quality data and manufacturing condition data. However, only by simply observing a correlation between an operation factor and quality, it is not possible to estimate the stage during a solidification process of molten steel at which an inclusion that becomes a seed of a defect adhered and became a surface defect in a final product. In order to carry out operation for eliminating the surface defect in the final product, it is extremely important to grasp a relationship between the solidification process of the molten steel and adhesion of inclusions.

The present invention has been made in view of the above, and an object of the present invention is to provide a defect cause estimation device, a defect cause estimation method, a learning method for a defect cause estimation model, an operation condition determination method, and a method of manufacturing a steel product that can estimate a defect cause based on a relationship between a solidification process of molten steel and adhesion of inclusions.

### Solution to Problem

To solve the above-described problem and achieve the object, a defect cause estimation device according to the present invention includes: a defect occurrence depth calculation unit configured to calculate a depth position at a slab stage of a surface defect in a product; a defect occurrence rate calculation unit configured to calculate a defect occurrence rate for each slab depth based on the depth position; an inclusion adhesion ratio calculation unit configured to calculate an inclusion adhesion ratio for each distance from a solidification start position during slab casting based on the defect occurrence rate for each slab depth; and a defect cause estimation unit configured to estimate a defect cause by selecting a part of manufacturing conditions using an estimation model learned in advance with manufacturing conditions for the product set as input data and with the inclusion adhesion ratio set as output data and by estimating an inclusion adhesion ratio in a case in which the selected manufacturing conditions are changed stepwise.

In the above-described defect cause estimation device according to the present invention, the estimation model is learned in advance with manufacturing conditions including a distance from the solidification start position and operation conditions in continuous casting set as input data and with an inclusion adhesion ratio for each distance from the solidification start position set as output data.

In the above-described defect cause estimation device according to the present invention, the defect occurrence depth calculation unit is configured to calculate the depth position considering at least a grinding amount by a slab-grinder in slab finishing, a scale-off amount in hot rolling, and an amount of plate thickness reduction due to pickling.

In the above-described defect cause estimation device according to the present invention, the defect cause estimation unit is configured to display a relationship between one or more manufacturing conditions and the inclusion adhesion ratio either as one-dimensional data or multi-dimensional data.

In the above-described defect cause estimation device according to the present invention, the inclusion adhesion ratio is a probability that bubbles in molten steel or inclusions, which are very small solid particles, adhere in a casting process.

In the above-described defect cause estimation device according to the present invention, the manufacturing conditions include any one or more of a tundish blowing gas flow rate, casting speed, a casting width, a casting thickness, a slab length, or slag basicity.

To solve the above-described problem and achieve the object, a defect cause estimation method according to the present invention includes: a step of calculating a depth position at a slab stage of a surface defect in a product by a defect occurrence depth calculation unit included in a computer; a step of calculating a defect occurrence rate for each slab depth based on the depth position by a defect occurrence rate calculation unit included in the computer; a step of calculating an inclusion adhesion ratio for each distance from a solidification start position during slab casting based on the defect occurrence rate for each slab depth by an inclusion adhesion ratio calculation unit included in the computer; and a step of estimating a defect cause by selecting a part of manufacturing conditions using an estimation model learned in advance with manufacturing conditions for the product set as input data and with the inclusion adhesion ratio set as output data and by estimating an inclusion adhesion ratio in a case in which the selected manufacturing conditions are changed stepwise by a defect cause estimation unit included in the computer.

To solve the above-described problem and achieve the object, a learning method for a defect cause estimation model according to the present invention includes: a step of calculating a depth position at a slab stage of a surface defect in a product by a defect occurrence depth calculation unit included in a computer; a step of calculating a defect occurrence rate for each slab depth based on the depth position by a defect occurrence rate calculation unit included in the computer; a step of calculating an inclusion adhesion ratio for each distance from a solidification start position during slab casting based on the defect occurrence rate for each slab depth by an inclusion adhesion ratio calculation unit included in the computer; and a step of learning an estimation model for estimating the inclusion adhesion ratio with manufacturing conditions for the product set as input data and with the inclusion adhesion ratio set as output data by a model learning unit included in the computer.

To solve the above-described problem and achieve the object, an operation condition determination method according to the present invention includes determining operation conditions based on the defect cause estimated by the above-described defect cause estimation method.

To solve the above-described problem and achieve the object, a method of manufacturing a steel product according to the present invention includes manufacturing a steel product based on the operation conditions determined by the above-described operation condition determination method.

To solve the above-described problem and achieve the object, a method of manufacturing a steel product according to the present invention includes: estimating an inclusion adhesion ratio for each distance from a solidification start position during slab casting based on operation conditions after casting with the above-described defect cause estimation method; changing operation conditions of subsequent processes based on the estimated inclusion adhesion ratio; and manufacturing a steel product.

### Advantageous Effects of Invention

In the defect cause estimation device and the defect cause estimation method according to the present invention, the estimation model for focusing on the reproducibility of the solidification process of the molten steel and the adhesion of the inclusion and estimating, from a large number of past operation record data, at which stage during the solidification process of the molten steel the inclusion that becomes a seed of a defect adheres and appears as a surface defect of the product is used. Accordingly, since the relationship between the solidification process of the molten steel and the adhesion of inclusions can be grasped, it is possible to conceive an operation for manufacturing a product without a surface defect. With the learning method for the defect cause estimation model according to the present invention, it is possible to construct an estimation model for estimating a defect cause based on the relationship between the solidification process of the molten steel and the adhesion of inclusions. With the operation condition determination method according to the present invention, it is possible to carry out an operation for manufacturing a product without a surface defect. With the method of manufacturing the steel product according to the present invention, it is possible to manufacture a steel product without a surface defect.

### Brief Description of Drawings

[FIG. 1] FIG. 1 is a diagram illustrating a schematic configuration of a defect cause estimation device according to an embodiment of the present invention.
[FIG. 2] FIG. 2 is a flowchart illustrating a procedure of a defect cause estimation method executed by the defect cause estimation device according to the embodiment of the present invention.
[FIG. 3] FIG. 3 is a diagram illustrating an example of a manufacturing process for a stainless steel product (a steel product).
[FIG. 4] FIG. 4 is an example of the present invention and is a diagram illustrating an example of actual operational data read from a database in a data reading step of the defect cause estimation method.
[FIG. 5] FIG. 5 is an example of the present invention and is a stacked graph in which presence or absence of a defect for each slab depth calculated in a defect occurrence rate calculation step of the defect cause estimation method is aggregated.
[FIG. 6] FIG. 6 is an example of the present invention and is a line graph illustrating a defect occurrence rate for each slab depth calculated in the defect occurrence rate calculation step of the defect cause estimation method.
[FIG. 7] FIG. 7 is an example of the present invention and is a diagram illustrating an image of solidification of molten steel and a flow of the molten steel in a mold.
[FIG. 8] FIG. 8 is an example of the present invention and is a line graph illustrating an inclusion adhesion ratio for each meniscus distance calculated in an inclusion adhesion ratio calculation step of the defect cause estimation method.
[FIG. 9] FIG. 9 is an example of the present invention and is a histogram illustrating model accuracy of an estimation model constructed in a model learning step of the defect cause estimation method.
[FIG. 10] FIG. 10 is an example of the present invention and is a contour diagram illustrating a relationship among a distance from a meniscus, a tundish blowing gas flow rate, and an inclusion adhesion ratio estimated in a defect cause estimation step of the defect cause estimation method.
[FIG. 11] FIG. 11 is an example of the present invention and is a graph illustrating a relationship between the distance from the meniscus and the inclusion adhesion ratio estimated in the defect cause estimation step of the defect cause estimation method.
[FIG. 12] FIG. 12 is an example of the present invention and is a graph illustrating a relationship between slag basicity and an inclusion adhesion ratio estimated in the defect cause estimation step of the defect cause estimation method.

### Description of Embodiment

A defect cause estimation device, a defect cause estimation method, a learning method for a defect cause estimation model, an operation condition determination method, and a method of manufacturing a steel product according to an embodiment of the present invention are explained with reference to the drawings. In the following explanation, an example in which the present invention is applied to a steel process for manufacturing a thick steel plate is explained. However, the present invention is not limited to the embodiment explained below and constituent elements in the embodiment explained below include constituent elements that can be easily replaced by those skilled in the art or constituent elements that are substantially the same.

### (Defect cause estimation device)

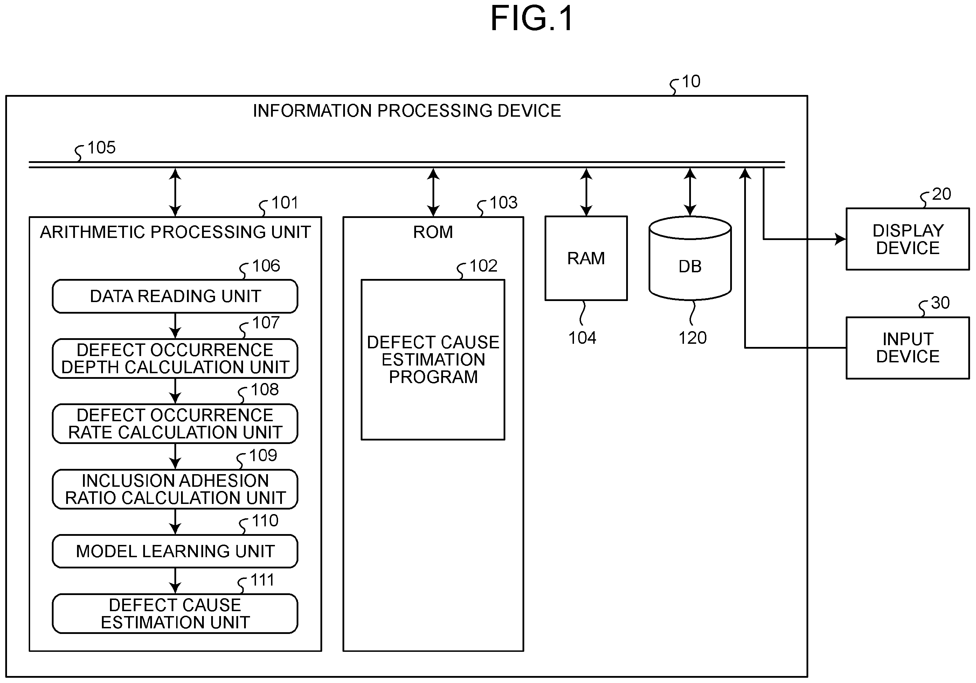

The defect cause estimation device according to the embodiment is explained with reference to FIG. 1. An information processing device 10 for implementing the defect cause estimation device includes an arithmetic processing unit 101, a storage unit (ROM: Read Only Memory) 103, a temporary storage unit (RAM: Random Access Memory) 104, a bus wire 105, and a database (DB) 120.

The arithmetic processing unit 101 is implemented using an electronic circuit such as a CPU (Central Processing Unit) and executes a defect cause estimation program 102 in the storage unit 103 to execute various kinds of arithmetic processing necessary for defect cause estimation processing. The arithmetic processing unit 101 includes, as functional blocks that function according to execution of the defect cause estimation program 102, a data reading unit 106, a defect occurrence depth calculation unit 107, a defect occurrence rate calculation unit 108, an inclusion adhesion ratio calculation unit 109, a model learning unit 110, and a defect cause estimation unit 111.

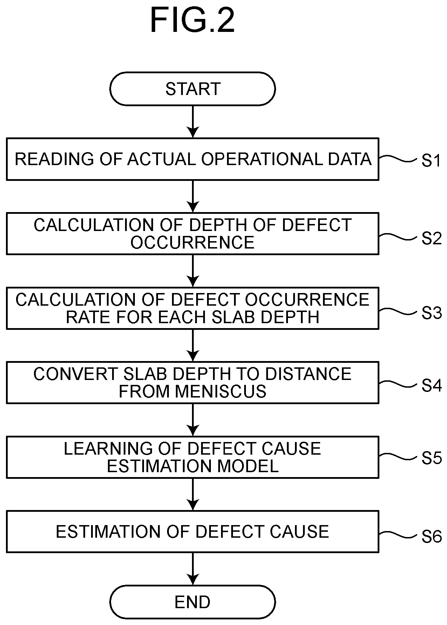

The data reading unit 106 executes a data reading step explained below. The defect occurrence depth calculation unit 107 executes a defect occurrence depth calculation step explained below. The defect occurrence rate calculation unit 108 executes a defect occurrence rate calculation step explained below. The inclusion adhesion ratio calculation unit 109 executes an inclusion adhesion ratio calculation step explained below. The model learning unit 110 executes a model learning step explained below. The defect cause estimation unit 111 executes a defect cause estimation step explained below. Details of the step are explained below (see FIG. 2 referred to below).

The defect cause estimation program 102 is stored in the storage unit 103. Past actual operational data is stored in the database 120. For example, as illustrated in FIG. 1, a display device 20 that displays an estimation result of a defect cause and an input device 30 that receives inputs from an operator may be connected to the information processing device 10.

### (Defect cause estimation method)

A defect cause estimation method executed by the defect cause estimation device according to the embodiment is explained with reference to FIG. 2. The defect cause estimation method includes a data reading step, a defect occurrence depth calculation step, a defect occurrence rate calculation step, an inclusion adhesion ratio calculation step, a model learning step, and a defect cause estimation step. In the defect cause estimation method according to the embodiment, the steps of the data reading step to the model learning step and the defect cause estimation step may be respectively carried out at different timings. That is, in the defect cause estimation method according to the embodiment, an estimation model may be constructed in advance by the data reading step to the model learning step and the defect cause estimation step using the estimation model may be carried out at timing different from the estimation model construction.

The steps of the defect cause estimation method according to the embodiment are explained below. In the defect cause estimation method, processing is started, for example, at the time when manufacturing of a target material is completed and a defect occurrence distribution is measured by the defect cause estimation device.

### <Data reading step>

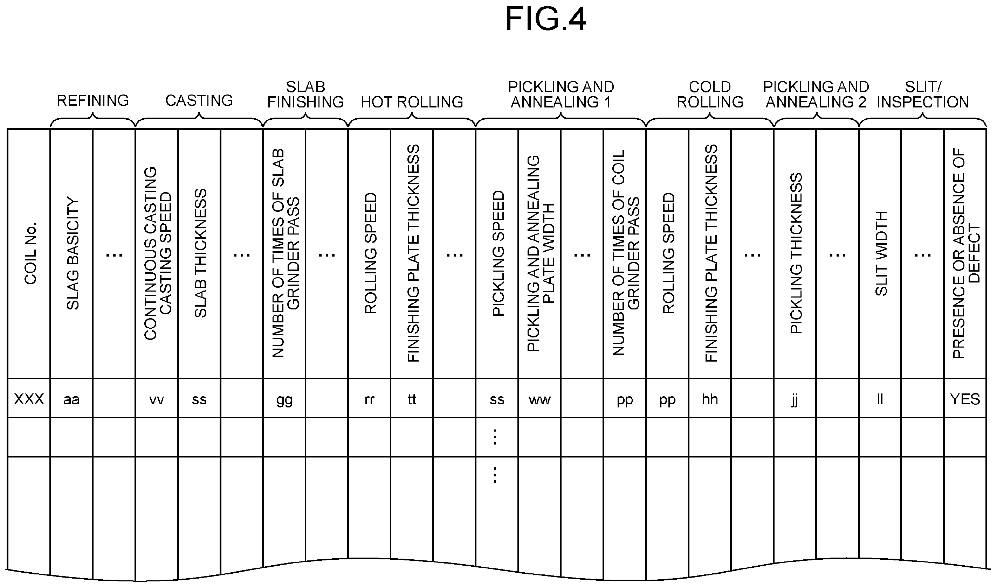

In the data reading step, the data reading unit 106 reads actual operational data of continuous casting stored in the database 120 (Step S1). This actual operational data is data in which manufacturing conditions relating to a thickness change of a slab (a semi-finished product) in a large number of coils (steel strips) manufactured in the past, manufacturing conditions relating to occurrence of a surface defect, presence or absence of occurrence of a defect on a coil surface, and the like are collected for each product (final product). The actual operational data includes, for example, matrix data in which a row direction represents a product manufactured in the past and a column direction represents manufacturing conditions, an inspection result (presence or absence of a defect), and the like (see FIG. 4 referred to below).

### <Defect occurrence depth calculation step>

In the defect occurrence depth calculation step, the defect occurrence depth calculation unit 107 calculates a depth position (a defect occurrence depth position) at a slab stage of a surface defect in a product based on the manufacturing conditions read in the data reading step (Step S2). The "defect occurrence depth position" indicates a depth position in the slab to which an inclusion appearing as a surface defect in the final product adheres.

In the defect occurrence depth calculation step, specifically, the defect occurrence depth calculation unit 107 calculates a decrease in the amount in the thickness direction of the product in processes based on manufacturing conditions relating to a thickness change of the slab to thereby calculate the depth of the surface defect in the product at the slab stage. Examples of the "manufacturing conditions relating to a thickness change of the slab" include manufacturing conditions under which a product surface is scaled-off, ground, and dissolved such as a reduction amount in hot rolling, a heating temperature, an acid concentration of pickling and pickling speed, and the number of times of grinder pass between the slab and the coils.

In the defect occurrence depth calculation step, for example, the defect occurrence depth calculation unit 107 calculates the depth position explained above considering at least a grinding amount by the slab-grinder in slab finishing, a scale-off amount in hot rolling, and an amount of plate thickness reduction (a pickling dissolution amount) due to pickling. In the defect occurrence depth calculation step, the defect occurrence depth calculation unit 107 calculates a defect occurrence depth at the slab stage for all products read in the data reading step.

### <Defect occurrence rate calculation step>

In the defect occurrence rate calculation step, the defect occurrence rate calculation unit 108 calculates a defect occurrence rate for each predetermined slab depth based on the depth position at the slab stage (Step S3). In the defect occurrence rate calculation step, the defect occurrence rate calculation unit 108 aggregates, for slabs for which the defect occurrence depth has been calculated in the defect occurrence depth calculation step, the number of products in which defects have occurred and a total number of products at a predetermined slab depth (a predetermined depth pitch, for example, 0.5 mm). Then, the defect occurrence rate calculation unit 108 divides the number of products in which defects have occurred by the total number of products to thereby calculate a defect occurrence rate (a defect occurrence ratio) for each predetermined slab depth. In the defect occurrence rate calculation step, the defect occurrence rate calculation unit 108 calculates, for all the products read in the data reading step, the defect occurrence rate for each predetermined slab depth. Here, in the above explanation, the predetermined depth pitch in the depth direction is constant. However, the predetermined depth pitch does not always have to be constant if a distribution of the defect occurrence rate in the slab depth direction is known.

### <Inclusion adhesion ratio calculation step>

In the inclusion adhesion ratio calculation step, the inclusion adhesion ratio calculation unit 109 converts the slab depth determined in the defect occurrence rate calculation step into a distance (hereinafter referred to as "distance from a meniscus") from a solidification start position during slab casting having a shell thickness equivalent to the slab depth (Step S4). Accordingly, the inclusion adhesion ratio calculation unit 109 calculates an inclusion adhesion ratio for each distance from the meniscus based on the defect occurrence rate for each slab depth.

Here, the inclusion adhesion ratio calculated in the inclusion adhesion ratio calculation step is a probability that bubbles in molten steel or inclusions, which are very small solid particles, adhere in a casting process. In the inclusion adhesion ratio calculation step, the inclusion adhesion ratio calculation unit 109 calculates, for all the products read in the data reading step, the inclusion adhesion ratio for each distance from the meniscus.

### <Model learning step>

In the model learning step, the model learning unit 110 learns, with manufacturing conditions for a product set as input data and with an inclusion adhesion ratio set as output data, a defect cause estimation model (hereinafter referred to as "estimation model") for estimating the inclusion adhesion ratio (Step S5).

In the model learning step, the model learning unit 110 performs learning of an estimation model based on the operation result data read in the data reading step and the inclusion adhesion ratio for each distance from the meniscus calculated in the inclusion adhesion ratio calculation step. More specifically, in the model learning step, the model learning unit 110 performs the learning of the estimation model with manufacturing conditions including the distance from the meniscus and the operation conditions in continuous casting set as input data and with the inclusion adhesion ratio for each distance from the meniscus set as output data.

The learning of the estimation model in the model learning step can be performed by a regression method such as random forest, linear regression, support vector machine, or neural network. However, the learning of the estimation model may be performed by a method other than the regression method explained above if the method is a method of estimating a target variable from an explanatory variable.

### <Defect cause estimation step>

In the defect cause estimation step, the defect cause estimation unit 111 inputs a value of the explanatory variable of operational conditions desired into be estimated and the distance from the meniscus to the estimation model constructed in the model learning step. Accordingly, the defect cause estimation unit 111 calculates an inclusion adhesion ratio at the distance from the meniscus under the operation conditions (Step S6).

In the defect cause estimation step, specifically, the defect cause estimation unit 111 selects a part of manufacturing conditions using an estimation model learned in advance with the manufacturing conditions for the product as input data and with the inclusion adhesion ratio as output data and estimates an inclusion adhesion ratio in the case in which the selected manufacturing conditions are changed stepwise. Accordingly, the defect cause estimation unit 111 estimates a defect cause. The manufacturing conditions input to the estimation model include, for example, any one or more of a tundish blowing gas flow rate, casting speed, a casting width, a casting thickness, a slab length, and slag basicity.

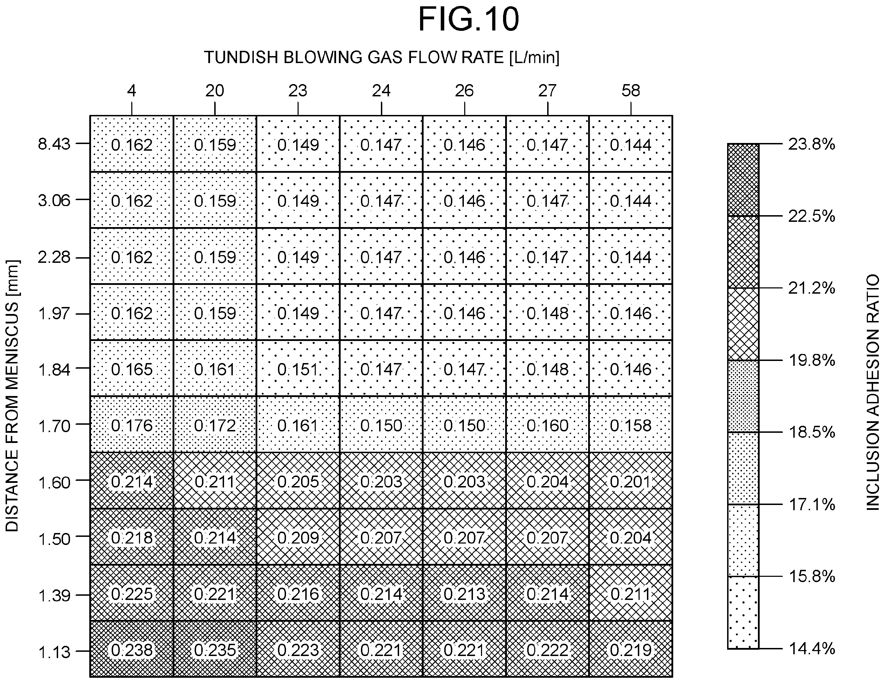

In the defect cause estimation step, for example, a relationship between one or more manufacturing conditions and the inclusion adhesion ratio is displayed as one-dimensional data or multi-dimensional data (see FIG. 10 to FIG. 12 referred to below).

### (Examples)

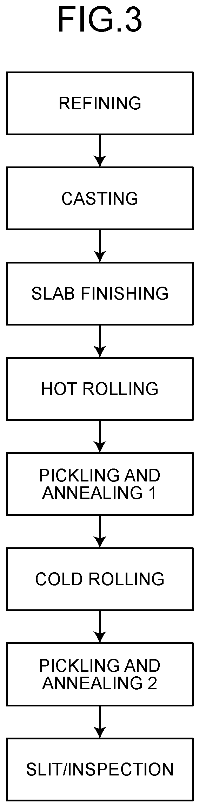

Examples of the present invention are explained with reference to FIG. 3 to FIG. 12. In the following explanation, an example in which the defect cause estimation method according to the present invention is applied to manufacturing of a stainless steel product is explained.

FIG. 3 illustrates an example of a manufacturing process for a stainless steel product. In the manufacturing of the stainless steel product, defect determination is performed in a slitting and inspection process through refining, casting, slab finishing, hot rolling, pickling and annealing 1 (first pickling and annealing), cold rolling, and pickling and annealing 2 (second pickling and annealing). Then, the stainless steel product is shipped as a coiled product. Explanation is made below along the steps (see FIG. 2) of the defect cause estimation method according to the present invention.

### <Data reading step>

First, in the data reading step, actual operational data illustrated in FIG. 4 is read. The actual operational data in the figure is matrix data in which a row direction indicates a coil product manufactured in the past and a column direction indicates manufacturing conditions and inspection results of processes. In the actual operational data in the figure, a coil No. is described in a first row and a name of an item is described in a first column. The number of samples (the number of rows) of the actual operational data is 2300 coils.

### <Defect occurrence depth calculation step>

In the defect occurrence depth calculation step, a reduction amount in the thickness direction of a slab due to scale-off, grinding, and dissolution in the processes is calculated from coil data in a second row of the actual operational data in FIG. 4 according to the following Expressions (1) to (5). Then, a thickness amount in terms of slab that has decreased from completion of casting to a product is calculated according to the following Expression (6). Accordingly, a defect occurrence depth at a slab stage of the coil is calculated.
(A) Grinding amount by the slab-grinder in slab finishing = ·· [mm]/1 pass × number of times of grinder pass
(B) Surface scale-off amount at the time of heating in hot rolling = ·· [mm]
(C) Pickling dissolution amount in pickling and annealing 1 = ·· [g/m2] × specific gravity 7.5 × ·· [g/m3]/plate width [m] × (standard pickling speed [mpm]/pickling speed [mpm])
(D) Coil grinder grinding amount in pickling and annealing 1 = ·· [µm/1 pass × number of times of grinder pass
(E) Pickling dissolution amount in pickling and annealing 2 = ·· [g/m2] × specific gravity 7.5 × ·· [g/m3]/plate width [m]
(F) Slab equivalent thickness decrease amount from casting completion to product = (A) + (B) + (C) × slab thickness/pickling and annealing plate thickness + (D) × slab thickness/pickling and annealing plate thickness + (E) × slab thickness/product thickness

In addition, in the defect occurrence depth calculation step, the calculation of the above Formulas (1) to (6) is performed for all the 2300 coils from the third row of the actual operational data of FIG. 4, and the defect occurrence depth at the slab stage of each coil is calculated.

### <Defect occurrence rate calculation step>

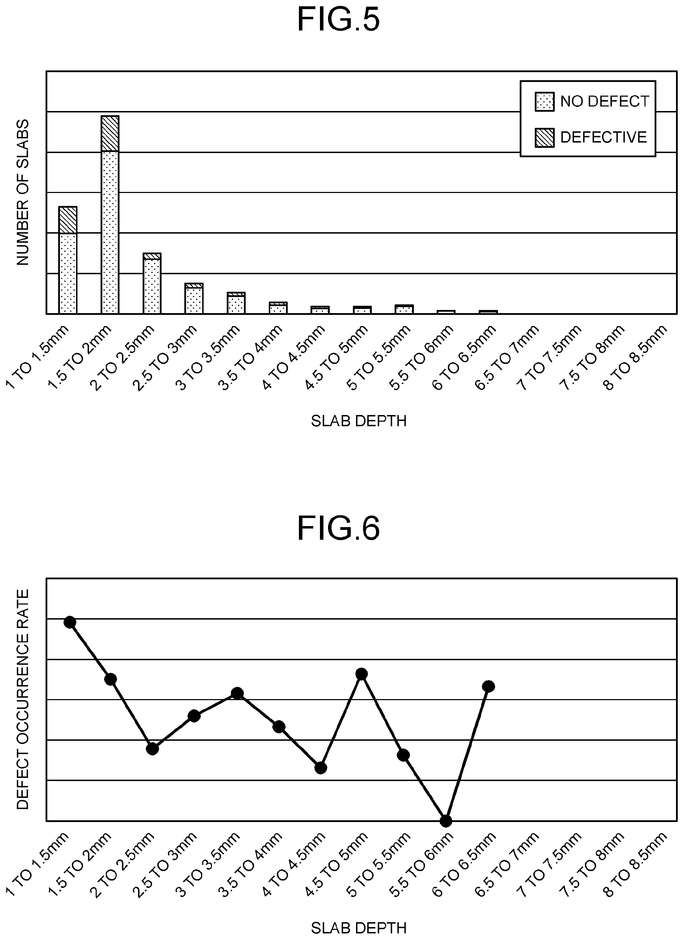

In the defect occurrence rate calculation step, a defect occurrence rate at a slab depth with a pitch of 0.5 mm is calculated based on data of defect occurrence depths at the slab stage of coils. FIG. 5 represents an aggregation result of defect occurrence depths as a stacked graph stacked by the number of defect-free slabs (= number of coils. However, when a plurality of coils are generated from one slab, the number of coils is converted to the number of slabs) and the number of defective slabs. In the figure, the horizontal axis represents a slab depth (0.5 mm pitch) and the vertical axis represents the number of slabs. In FIG. 6, a defect occurrence rate is calculated based on the aggregation result in FIG. 5. The horizontal axis represents the slab depth (0.5 mm pitch) and the vertical axis represents the defect occurrence rate.

### <Inclusion adhesion ratio calculation step>

In the inclusion adhesion ratio calculation step, the slab depth illustrated in FIG. 6 is converted into a distance from a meniscus (a solidification start point) of a mold of a continuous casting machine in a drawing direction according to the following Expression (7). Slab depth (shell thickness) [m] = solidification constant [ms-1/2] × (distance from meniscus [m]/casting speed [ms-1] ^ (1/2)

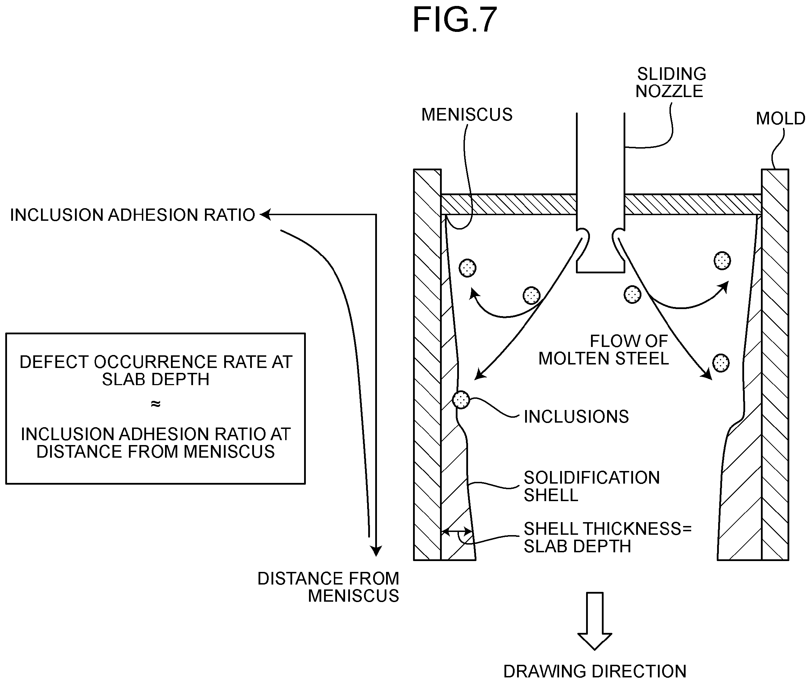

A meaning of Expression (7) described above is explained with reference to FIG. 7. The figure illustrates an image of solidification of molten steel and a flow of the molten steel in the mold. As illustrated in this figure, in the mold, inclusions that become seeds of defects adhere to a shell. A shell thickness at the time when the inclusions adhere is exposed to the surface as defects at a product stage just when the slab is scraped through the processes. For that reason, the distance from the meniscus and the shell thickness in Expression (7) described above have the same meaning as the slab depth. "A defect occurrence rate at a predetermined slab depth" can be regarded as "an inclusion adhesion ratio at a distance from a predetermined meniscus".

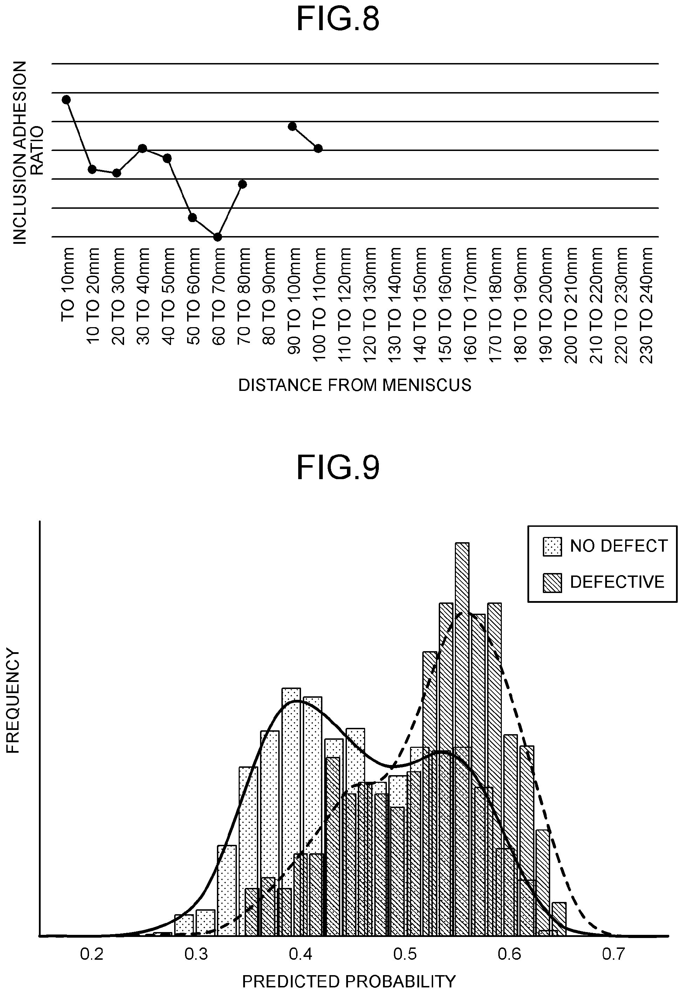

FIG. 8 illustrates a result of converting the slab depth on the horizontal axis of FIG. 6 into a distance from the meniscus. The horizontal axis represents the distance from the meniscus and the vertical axis represents the inclusion adhesion ratio. Since the slab depth is converted into the distance from the meniscus, the defect occurrence rate on the vertical axis in FIG. 6 is indicated as the inclusion adhesion ratio in FIG. 8. As illustrated in FIG. 8, it can be seen that inclusions easily adhere near the meniscus and at positions of respectively 30 to 40 mm, 70 to 80 mm, and 90 to 120 mm from the meniscus. That is, the figure suggests that the flow of molten steel carries the inclusions toward the positions described above.

In the model learning step, an estimation model was learned using a random forest method of a machine learning with explanatory variables (input data) set as a meniscus distance, a tundish blowing gas flow rate, casting speed, a casting width, a casting thickness, a slab length, and slag basicity and with a target variable set as an inclusion adhesion ratio. FIG. 9 is a histogram illustrating model accuracy of the learned estimation model. The horizontal axis represents the inclusion adhesion ratio estimated by the estimation model and the vertical axis represents the number of verification samples (frequency). In the figure, a histogram indicated by dot hatching is a histogram indicating a coil estimated as having no defect (having no adhesion of inclusions) and a histogram indicated by diagonal hatching is a histogram indicating a coil estimated as having a defect (having adhesion of inclusions).

In FIG. 9, a peak of a ridge of the histogram indicating the coil estimated as having no defect and a peak of a ridge of the histogram indicating the coil estimated as having a defect, the histogram being indicated by diagonal hatching, are clearly separated from each other on the left and the right. For that reason, it can be said that the learned estimation model can accurately estimate the presence or absence of the defect of the coil.

### <Defect cause estimation step>

In the defect cause estimation step, values of the casting speed, the casting width, the casting thickness, the slab length, and the slag basicity among the explanatory variables were fixed as average value of actual operation and input into the learned estimation model. Two explanatory variables of the meniscus distance and the tundish blowing gas flow rate among the explanatory variables were input while being changed. As explained above, in the defect cause estimation step, the inclusion adhesion ratio was estimated by fixing a part of input data and inputting the other input data to the estimation model while changing the input data stepwise.

FIG. 10 is a contour diagram illustrating a relationship among the distance from the meniscus, the tundish blowing gas flow rate, and the inclusion adhesion ratio estimated by the method explained above. In the figure, the vertical axis represents the distance from the meniscus, the horizontal axis represents the tundish blowing gas flow rate, and the density of dots represents the inclusion adhesion ratio. In the figure, the distance from the meniscus increases upward. The tundish blowing gas flow rate increases toward the right. The inclusion adhesion ratio increases as the dots are darker.

Referring to FIG. 10, it is possible to read that, for example, the inclusion adhesion ratio is high near the meniscus and the inclusion adhesion ratio can be reduced as the tundish blowing gas flow rate is increased. Therefore, the operator can grasp a relationship between the solidification process of the molten steel and the adhesion of inclusions by referring to the result of the figure and can obtain a suggestion for considering an optimum flow of molten steel for suppressing an inclusion adhesion amount, that is, a surface defect of a product.

Here, in FIG. 10, the relationship between multiple explanatory variables (the distance from the meniscus and the tundish blowing gas flow rate) and the inclusion adhesion ratio is estimated. However, a relationship between one explanatory variable and the inclusion adhesion ratio may be estimated.

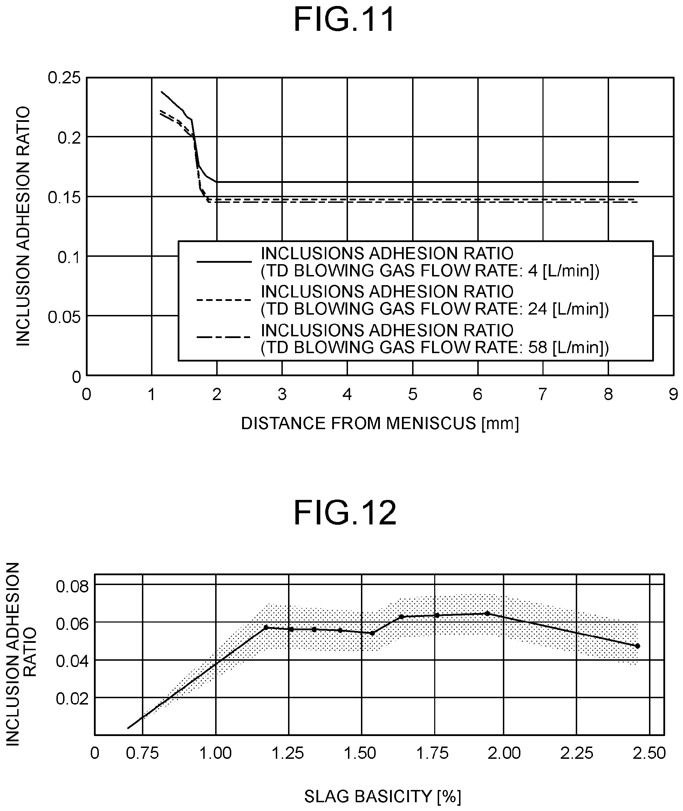

For example, FIG. 11 is a graph illustrating the relationship between the distance from the meniscus and the inclusion adhesion ratio among the explanatory variables. In the figure, the horizontal axis represents the distance from the meniscus and the vertical axis represents the inclusion adhesion ratio. A solid line, a broken line, and an alternate long and short dash line indicate inclusion adhesion ratios in the case in which tundish blowing gas flow rates (TD blowing gas flow rates) are respectively 4 L/min, 24 L/min, and 58 L/min. As explained above, the defect adhesion ratio for each distance from the meniscus (= slab depth) may be estimated based on the operation conditions after casting.

FIG. 12 is a graph illustrating a relationship between the slag basicity and the inclusion adhesion ratio among the explanatory variables. In the figure, the horizontal axis represents the slag basicity and the vertical axis represents the inclusion adhesion ratio. As explained above, the defect adhesion ratio for each slag basicity may be estimated based on the operation conditions after casting.

In the above explanation, it has been assumed that the relationship between the solidification process of the molten steel and the adhesion of inclusions is grasped based on the estimation result of the defect cause estimation step, the operation conditions for eliminating a surface defect of the product are determined, and the operation conditions are utilized for the next operation. Alternatively, for example, in the defect cause estimation step, the inclusion adhesion ratio during slab casting may be estimated based on the operation conditions after casting and operation conditions for the subsequent processes may be changed based on a result of the estimation. That is, at the time of manufacturing a product, the inclusion adhesion ratio may be estimated at a stage halfway in the process and the operation conditions for the subsequent processes may be determined (changed) according to a result of the estimation.

In this case, for example, as illustrated in FIG. 11, a defect adhesion ratio for each distance from the meniscus (= slab depth) is estimated based on the operation conditions after casting. Subsequently, from the estimated defect adhesion ratio, a slab depth amount at which the defect adhesion ratio is larger than a threshold determined from the viewpoint of quality assurance (for example, when the defect adhesion ratio is 20% within 2 mm from a slab surface layer) is read. Then, a grinding amount by the slab-grinder in a slab finishing process, which is a post-process, is determined such that the slab surface layer is finally ground by the read slab depth amount.

That is, an amount obtained by subtracting prediction amounts of a surface scale-off amount in hot rolling and a pickling dissolution amount in pickling and annealing from an amount by which the slab should be ground is determined as the grinding amount by the slab-grinder. When the determined grinding amount by the slab-grinder exceeds a preset maximum grinder grinding amount (for example, a maximum grinding amount determined from the viewpoint of repair efficiency), for example, setting is changed to decrease the pickling speed.

For example, as illustrated in FIG. 12 above, a defect adhesion ratio for each slag basicity in the refining process is estimated. Here, the slag basicity is restricted from the viewpoint of operation other than inclusion occurrence such as cost of slag manufacturing. For that reason, for example, when the slag basicity is restricted at 1.25 to 2.00%, a value of slag basicity 1.6% at which the inclusion adhesion ratio is the smallest is read from FIG. 12. Then, the read slag basicity (1.6%) is determined as a setting value of the slag basicity in the refining process.

As explained above, when a product is manufactured still under the preset operation conditions, it is possible to manufacture a product without surface defects by estimating the depth of the slab at which a probability of occurrence of a defect is high and changing the operation conditions to appropriate operation conditions based on the estimation result.

In the defect cause estimation device and the defect cause estimation method according to the embodiment explained above, reproducibility of the solidification process of the molten steel and adhesion of inclusions is focused. Then, an estimation model for estimating, from a large number of past operation result data, the stage during the solidification process of molten steel at which an inclusion that becomes a defect seed adheres and appears as a surface defect of a product is used. Accordingly, since the relationship between the solidification process of the molten steel and the adhesion of inclusions can be grasped, it is possible to conceive an operation for manufacturing a product without a surface defect.

With the learning method for the defect cause estimation model according to the embodiment, it is possible to construct an estimation model for estimating a defect cause based on the relationship between the solidification process of molten steel and adhesion of inclusions.

With the operation condition determination method according to the embodiment, it is possible to determine operation conditions based on the defect cause estimated using the defect cause estimation method. Accordingly, it is possible to implement an operation for manufacturing a product without surface defects.

With the method of manufacturing a steel product according to the embodiment, it is possible to manufacture a steel product based on the operation conditions determined using the operation condition determination method. Accordingly, it is possible to manufacture a steel product without surface defects.

With the method of manufacturing a steel product according to the embodiment, the inclusion adhesion ratio for each distance from the solidification start position during slab casting is estimated based on the operation conditions after casting using the defect cause estimation method. It is possible to change, based on the estimated inclusion adhesion ratio, operation conditions for the subsequent processes and manufacture a steel product. Accordingly, it is possible to manufacture a steel product without surface defects.

The embodiment to which the invention made by the present inventor is applied is explained above. However, the present invention is not limited to the description and the drawings forming a part of the disclosure of the present invention by the present embodiment. That is, all of other embodiments, examples, operation techniques, and the like made by those skilled in the art and the like based on the present embodiment are included in the scope of the present invention.

### Reference Signs List

10 INFORMATION PROCESSING DEVICE
101 ARITHMETIC PROCESSING UNIT
102 DEFECT CAUSE ESTIMATION PROGRAM
103 STORAGE UNIT (ROM)
104 TEMPORARY STORAGE UNIT (RAM)
105 BUS WIRE
106 DATA READING UNIT
107 DEFECT OCCURRENCE DEPTH CALCULATION UNIT
108 DEFECT OCCURRENCE RATE CALCULATION UNIT
109 INCLUSION ADHESION RATIO CALCULATION UNIT
110 MODEL LEARNING UNIT
111 DEFECT CAUSE ESTIMATION UNIT
120 DATABASE (DB)
20 DISPLAY DEVICE
30 INPUT DEVICE

## Claims

1. A defect cause estimation device comprising:
a defect occurrence depth calculation unit configured to calculate a depth position at a slab stage of a surface defect in a product;
a defect occurrence rate calculation unit configured to calculate a defect occurrence rate for each slab depth based on the depth position;
an inclusion adhesion ratio calculation unit configured to calculate an inclusion adhesion ratio for each distance from a solidification start position during slab casting based on the defect occurrence rate for each slab depth; and
a defect cause estimation unit configured to estimate a defect cause by selecting a part of manufacturing conditions using an estimation model learned in advance with manufacturing conditions for the product set as input data and with the inclusion adhesion ratio set as output data and by estimating an inclusion adhesion ratio in a case in which the selected manufacturing conditions are changed stepwise.

2. The defect cause estimation device according to claim 1, wherein the estimation model is learned in advance with manufacturing conditions including a distance from the solidification start position and operation conditions in continuous casting set as input data and with an inclusion adhesion ratio for each distance from the solidification start position set as output data.

3. The defect cause estimation device according to claim 1, wherein the defect occurrence depth calculation unit is configured to calculate the depth position considering at least a grinding amount by a slab-grinder in slab finishing, a scale-off amount in hot rolling, and an amount of plate thickness reduction due to pickling.

4. The defect cause estimation device according to claim 1, wherein the defect cause estimation unit is configured to display a relationship between one or more manufacturing conditions and the inclusion adhesion ratio either as one-dimensional data or multi-dimensional data.

5. The defect cause estimation device according to claim 1, wherein the inclusion adhesion ratio is a probability that bubbles in molten steel or inclusions, which are very small solid particles, adhere in a casting process.

6. The defect cause estimation device according to claim 1, wherein the manufacturing conditions include any one or more of a tundish blowing gas flow rate, casting speed, a casting width, a casting thickness, a slab length, or slag basicity.

7. A defect cause estimation method comprising:
a step of calculating a depth position at a slab stage of a surface defect in a product by a defect occurrence depth calculation unit included in a computer;
a step of calculating a defect occurrence rate for each slab depth based on the depth position by a defect occurrence rate calculation unit included in the computer;
a step of calculating an inclusion adhesion ratio for each distance from a solidification start position during slab casting based on the defect occurrence rate for each slab depth by an inclusion adhesion ratio calculation unit included in the computer; and
a step of estimating a defect cause by selecting a part of manufacturing conditions using an estimation model learned in advance with manufacturing conditions for the product set as input data and with the inclusion adhesion ratio set as output data and by estimating an inclusion adhesion ratio in a case in which the selected manufacturing conditions are changed stepwise by a defect cause estimation unit included in the computer.

8. A learning method for a defect cause estimation model, comprising:
a step of calculating a depth position at a slab stage of a surface defect in a product by a defect occurrence depth calculation unit included in a computer;
a step of calculating a defect occurrence rate for each slab depth based on the depth position by a defect occurrence rate calculation unit included in the computer;
a step of calculating an inclusion adhesion ratio for each distance from a solidification start position during slab casting based on the defect occurrence rate for each slab depth by an inclusion adhesion ratio calculation unit included in the computer; and
a step of learning an estimation model for estimating the inclusion adhesion ratio with manufacturing conditions for the product set as input data and with the inclusion adhesion ratio set as output data by a model learning unit included in the computer.

9. An operation condition determination method comprising
determining operation conditions based on the defect cause estimated by the defect cause estimation method according to claim 7.

10. A method of manufacturing a steel product, comprising
manufacturing a steel product based on the operation conditions determined by the operation condition determination method according to claim 9.

11. A method of manufacturing a steel product, the method comprising:
estimating an inclusion adhesion ratio for each distance from a solidification start position during slab casting based on operation conditions after casting with the defect cause estimation method according to claim 7;
changing operation conditions of subsequent processes based on the estimated inclusion adhesion ratio; and
manufacturing a steel product.
